# EUROPÄISCHE PATENTSCHRIFT

(11) **EP 1 597 537 B1**
(45) Veröffentlichungstag und Bekanntmachung des Hinweises auf die Patenterteilung: **04.02.2009**
(21) Anmeldenummer: 03779855.0
(22) Anmeldetag: 06.11.2003
(51) Int. Cl.: G01B 11/00, B44B 5/00

(54) **VERFAHREN ZUR QUALITÄTSKONTROLLE VON ZWEIDIMENSIONALEN MATRIX-CODES AN METALLISCHEN WERKSTÜCKEN MIT EINEM BILDVERATRBEITUNGSGERÄT**
QUALITY CONTROL METHOD FOR TWO-DIMENSIONAL MATRIX CODES ON METALLIC WORKPIECES, USING AN IMAGE PROCESSING DEVICE
PROCEDE DE CONTROLE DE QUALITE DE CODES DE MATRICE BIDIMENSIONNELS SUR DES PIECES METALLIQUES A USINER A L'AIDE D'UN APPAREIL DE TRAITEMENT D'IMAGES

(30) Priorität: 28.02.2003 DE 10308684
(43) Veröffentlichungstag der Anmeldung: 23.11.2005
(73) Patentinhaber: Borries Markier-Systeme GmbH, 72124 Pliezhausen (DE)
(72) Erfinder: FRÖHLICH, Konrad, 70180 Stuttgart (DE)
(74) Vertreter: Farago, Peter Andreas
(86) Internationale Anmeldenummer: PCT/EP2003/012405
(87) Internationale Veröffentlichungsnummer: WO 2004/076968

(56) Entgegenhaltungen:
- DE-A- 4 230 621
- DE-A- 19 930 272
- US-A- 6 135 350
- US-B1- 6 243 618

## Beschreibung

Die Erfindung betrifft ein Verfahren zur Qualitätskontrolle von zweidimensionalen Matrix-Codes an metallischen Werkstücken, die in Form von geprägten Markierungspunkten vorliegen, mit einem Bildverarbeitungsgerät.

Die Markierungspunkte eines solchen zweidimensionalen Matrix-Codes werden üblicherweise mittels einer Hartmetallnadel eines Markierwerkzeugs eingeschlagen. Dies erfolgt zum einen sehr schnell und zum anderen in sehr enger Anordnung, wobei derartige Matrix-Flächen sehr klein sein können und nur wenige Millimeter Länge und Breite besitzen. Um die Information des Matrix-Codes fehlerfrei rücklesen zu können, kommt der Präzision bei der Anbringung der Markierungspunkte eine hohe Bedeutung zu, wobei die exakte Form, Größe, Position und Tiefe der Markierungspunkte wichtige Qualitätsmerkmale sind. Es ist daher sehr wichtig, bei bzw. nach der Herstellung eines solchen Matrix-Codes zu prüfen, ob die Information wieder fehlerfrei rücklesbar ist, das heißt, ob die Markierungspunkte an der korrekten Stelle in der erforderlichen Qualität vorliegen.

Bekannte Verfahren zur Qualitätskontrolle von zweidimensionalen Matrix-Codes benutzen eine so genannte Finder-Funktion, wie sie auch beim Lesen zur Lagebestimmung des Code-Feldes verwendet wird. Die quadratischen Matrix-Codes besitzen zwei aneinandergrenzende Randlinien mit eng aufeinander folgenden Markierungspunkten. Diese beiden Randlinien werden in den von einer Kamera als Bildverarbeitungsgerät aufgenommenen Bilddaten gesucht, um auf diese Weise die Position des Matrix-Codes zu erfassen. Die beiden übrigen Randlinien besitzen Markierungspunkte, deren Abstand jeweils dem der Gitterlinien eines Gitters entspricht, das die Markierungspunkte als Gitterpunkte besitzt. Auf diese Weise werden aus den Bilddaten diese Gitterpunkte ermittelt, wobei dann anschließend an den berechneten Punkten geprüft wird, ob sich dort ein Markierungspunkt in der gewünschten Qualität befindet. Durch die Bilderfassung, Bildverarbeitung und anschließende Berechnung gehen vielfältige Fehlerfaktoren in die Qualitätskontrolle ein, die das gesamte Verfahren, insbesondere bei sehr kleinen Punktabständen sehr ungenau machen.

Die DE 199 30 272 A offenbart ein Verfahren zur Qualitätskontrolle einer Kennzeichnung, die anhand vorgegebener digitaler Positionsdaten mittels eines Markierwerkzeugs auf ein metallisches Werkstück geprägt wird, mit einem Bildverarbeitungsgerät, das eine ortsfest zum Markierwerkzeug, aber unter einem anderen Winkel zum Werkstück als das Markierwerkzeug angeordnete Kamera umfasst. Während das Werkstück unter dem Markierwerkzeug und der Kamera vorgeschoben wird, beobachtet die Kamera ein Feld auf dem Werkstück, dessen Breite dem Eingriffsbereich des Markierwerkzeugs entspricht und das ein Stück der gerade hergestellten Kennzeichnung enthält. Das ganze aufgenommene Bild wird ausgewertet, um Stellgrößen zur Einstellung mindestens eines Werkzeugparameters abzuleiten.

Der Erfindung liegt die Aufgabe zugrunde, ein Verfahren zur schnellen, einfachen und exakteren Qualitätskontrolle von zweidimensionalen Matrix-Codes zu schaffen.

Diese Aufgabe wird erfindungsgemäß durch ein Verfahren mit den Merkmalen des Anspruchs 1 gelöst.

Die Vorteile des erfindungsgemäßen Verfahrens bestehen insbesondere darin, dass die bekannte Finder-Funktion entfallen kann und durch eine wesentlich exaktere Methode zum Auffinden der Markierungspunkte und zur Prüfung derselben ersetzt wird. Die ohnehin vorgegebenen Positionsdaten für das Markierwerkzeug werden erfindungsgemäß dem Bildverarbeitungsgerät zugeführt, so dass dieses ohne Bilderfassung im Besitz der exakten Koordinaten der Markierungspunkte ist. Die Qualitätsprüfung braucht dann lediglich noch an diesen Koordinatenpunkten durchgeführt werden. Alle Fehler der bekannten Verfahren, die mit der Ermittlung der Koordinatenpositionen zusammenhängen entfallen daher praktisch vollständig, so dass die Qualitätsprüfung der Markierungspunkte mit wesentliche größerer Genauigkeit durchgeführt werden kann.

Durch die in den abhängigen Ansprüchen aufgeführten Maßnahmen sind vorteilhafte Weiterbildungen und Verbesserungen des im Anspruch 1 angegebenen Verfahrens möglich.

Zur Prüfung der erwünschten Qualitätseigenschaften der jeweiligen Markierungspunkte wird einer oder werden mehrere der folgenden Parameter erfasst und mit Vorgabedaten verglichen: Fläche, Tiefe, Länge, Breite, Flächenmittel- oder Flächenschwerpunkt, Ovalität. Diese Prüfung erfolgt anhand der an den koordinaten Stellen erfassten Bildinformationen. Dabei können Abweichungen für die Vorgabedaten dokumentiert oder sogar Bewertungskriterien abgegeben werden.

Zur Kompensation eines eventuell doch noch vorhandenen geringen Lage-Offsets wird in vorteilhafter Weise der Mittelwert der Lageabweichungen aller Markierungspunkte jeweils als Offsetwert subtrahiert. Ein solcher Lage-Offset beinhaltet nämlich keine Qualitätsabweichung des zu prüfenden Codes, sondern lediglich die Ungenauigkeit der benutzten Lage-Relation von Bildverarbeitungsgerät bzw. Kamera einerseits und Markierwerkzeug andererseits.

Eine vorteilhafte Maßnahme zur Erzielung einer hochwertigen Qualitätskontrolle besteht darin, dass vor der Anbringung eines Matrix-Codes ein Referenzbild des entsprechenden Oberflächenbereichs des Werkstücks aufgenommen und gespeichert und/oder ausgewertet wird. Bei als zu schlecht erkanntem Oberflächenbereich, also beispielsweise zu grober Oberflächentextur oder gravierenden Fehlstellen, wie Lunker oder mechanische Beschädigungen, erfolgt eine Verschiebung zu einem anderen besseren Oberflächenbereich, der selbstverständlich ebenfalls zunächst wieder geprüft wird. Hierdurch kann von vornherein eine nicht brauchbare Markierung vermieden werden.

Ein weiterer Vorteil der Erfassung eines Referenzbilds der Materialoberfläche vor der Anbringung eines Matrix-Codes besteht darin, dass eine Korrelation zwischen dem Referenzbild und den entsprechenden Bilddaten nach der Anbringung des Matrix-Codes zur Eliminierung von störenden Oberflächentexturdaten durchgeführt wird. Durch eine solche Korrelation des Referenz-Bildes mit dem zu analysierenden Bild werden Differenzen zwischen dem tatsächlichen physikalisch-geometrischen Eigenschaften eines Markierungspunktes und dessen in der Kamera entstandenen optischen Abbildung in Form von Pixel-Mustern reduziert und aus der Auswertung der zu begutachtenden Codierung herausgenommen. Diese Differenzen können auch durch Beleuchtung, Optik, CCD-Sensor und Signalfilterung entstehen.

Eine weitere vorteilhafte Maßnahme zur Verbesserung der Qualitätskontrolle besteht darin, die Bilddaten mit unterschiedlichen Schärfeeinstellungen zu erfassen, insbesondere sie in unterschiedlichen Abständen zwischen Kamera und Werkstückoberfläche aufzunehmen und zu korrelieren. Störende Einflüsse verschiedener Art können dadurch leichter ausgefiltert werden.

Eine weitere vorteilhafte Maßnahme zur Verbesserung der Qualitätskontrolle besteht darin, zur Korrelation mit den zu bewertenden Markierungspunkten einen vorab real als Bild aufgenommenen einzelnen Markierungspunkt elektronisch in einem "künstlichen" Bild zu verwenden, das durch Einblendung dieses "Referenzbildes" eines Markierungspunkts an alle vorgegebenen Soll-Positionen von Markierungspunkten des aktuell zu vermessenden Code-Bildes entsteht. Dieses "Referenzbild" eines Markierungspunkts kann bezüglich verschiedener Merkmale mit unterschiedlicher Qualität erzeugt worden sein und verwendet werden. Alternativ hierzu kann dieses "Referenzbild" durch statistische Mittelung vieler real erzeugter Markierungspunkte entstanden sein.

In vorteilhafter Weise kann das Markierwerkzeug und das Bildverarbeitungsgerät mechanisch miteinander gekoppelt bewegt werden. Dadurch ist eine toleranzfreie alternative Positionierung von Bildverarbeitungsgerät bzw. Kamera einerseits und Markierwerkzeug andererseits über der Markierposition des Werkstücks dadurch möglich, dass beide mittels desselben Drei-Achs-Schlitten-Systems bewegt werden. Die toleranzfreie Positionierung auch in der Z-Achse erlaubt eine maßstäblich Abbildung und damit auch eine kalibrierbare Größenmessung.

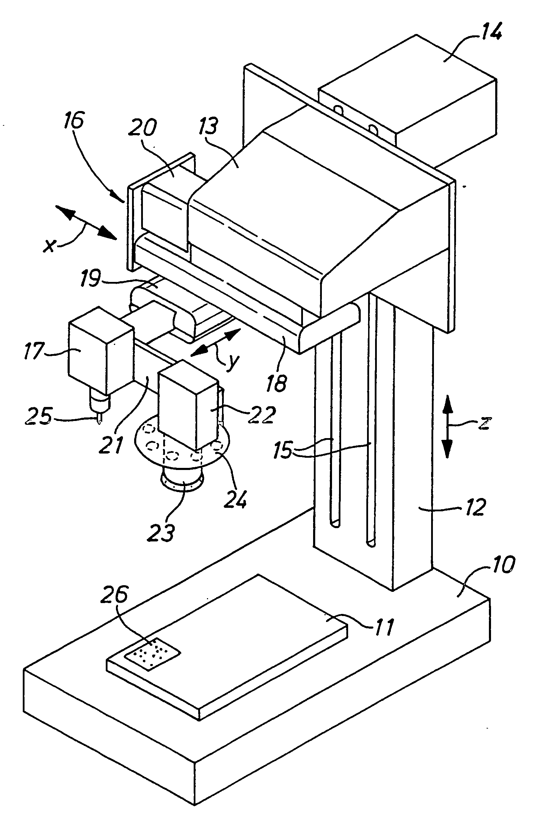

Ein Ausführungsbeispiel der Erfindung ist in der Zeichnung dargestellt und in der nachfolgenden Beschreibung näher erläutert. Die einzige Figur zeigt eine perspektivische Darstellung eines an einer verstellbaren Halterung angebrachten Markierwerkzeugs, das mit einer Kamera fest verbunden ist.

An einem Auflagetisch 10 zur Aufnahme von mit einem zweidimensionalen Matrix-Code zu versehenden metallischen Werkstücken 11 ist ein Ständer 12 angeordnet, an dem eine Halterung 13 mittels eines motorischen Antriebs 14 vertikal verfahrbar und positionierbar ist. Zur Führung am Ständer 12 bei der Bewegung in der vertikalen z-Richtung dienen Führungsnuten 15.

An der Halterung 13 ist ein Schlittenanordnung 16 angeordnet, durch die ein Markierwerkzeug 17 in den beiden horizontalen Achsen (x-Achse und y-Achse) verfahrbar und positionierbar ist. Die Schlittenanordnung 16 besteht aus einem x-Schlitten 18 für die x-Richtung und einem y-Schlitten 19 für die y-Richtung. Die Schlitten 18 und 19 weisen jeweils motorische Positionierantriebe auf, wobei lediglich der Positionierantrieb 20 für den x-Schlitten 18 in der perspektivischen Darstellung erkennbar ist.

Das Markierwerkzeug 17 ist mittels eines Abstandselements 21 fest mit einem als Kamera 22 ausgebildeten Bildverarbeitungsgerät verbunden, das beispielsweise als CCD-Kamera ausgebildet sein kann. Um das Objektiv 23 der Kamera 22 herum ist eine Beleuchtungsvorrichtung 24 angeordnet, um die Matrix-Fläche möglichst gut auszuleuchten. Selbstverständlich kann die Beleuchtungsvorrichtung 24 auch an einer anderen Stelle der Kamera 22 und/oder des Markierwerkzeugs 17 angeordnet sein.

Das Markierwerkzeug 17 besitzt ein beispielsweise als Hartmetallnadel 25 ausgebildetes Schlagwerkzeug, das nach geeigneter Positionierung Schlagbewegungen gegen das Werkstück 11 zum Erzeugen der als Schlagvertiefungen ausgebildeten Markierungspunkte ausführt. Eine Vielzahl solcher Markierungspunkte bildet dann einen zweidimensionalen Matrix-Code 26, wobei das Vorhandensein oder Fehlen der Markierungspunkte an den jeweiligen Rasterstellen die binär verschlüsselte Information darstellt. Der motorische Antrieb 14 für die Halterung 13 und die Schlittenanordnung 16 dienen dabei zur Positionierung des Markierwerkzeugs 17 über der zu codierenden Stelle am metallischen Werkstück 11.

Vor Beginn des Markierungsvorgangs wird die Kamera 22 über der zu codierenden Stelle positioniert, und diese nimmt dann ein Referenzbildsignal der zu codierenden Fläche auf. Aufgrund dieses Referenzbildsignals kann die Bewertung der Oberflächentextur erfolgen, z.B. Grauwert-Verteilung und Varianz. Mittels einer Schwellwert-Bewertung kann geprüft werden, ob sich die für die Markierung vorgesehene Stelle überhaupt dafür eignet, oder ob zum Beispiel die Oberflächenrauhigkeit zu groß ist oder gravierende Fehlstellen, wie Lunker oder dergleichen vorliegen, oder aber ob dieser Bereich erhebliche mechanische Beschädigungen aufweist, die ihn für eine Code-Markierung ungeeignet machen. Wenn die Auswertung ergibt, dass sich die vorgesehene Stelle aus den vorgenannten Gründen nicht für eine Markierung eignet, wird durch Verfahren der Schlittenanordnung 16 eine bessere störungsfreiere Markierstelle gesucht. Die gefundene Stelle wird dann mit ihren Offset-Werten in der Markiersteuerung berücksichtigt bzw. übernommen.

Anschließend wird das Markierwerkzeug 17 mittels des x-Schlittens 18 über eine Strecke verschoben, die exakt dem Abstand zwischen dem Objektiv 23 der Kamera 22 und der Hartmetallnadel 25 entspricht. Dadurch wird das Markierwerkzeug exakt an der Stelle positioniert, an der zuvor die Kamera 22 positioniert war. Nun wird durch eine Folge von Schlagbewegungen der Hartmetallnadel 25 und Bewegungen der Schlittenanordnung 16 der Matrix-Code 26 erzeugt. Die Positionen der einzelnen Matrixpunkte werden anhand gespeicherter digitaler Positionsdaten vorgegeben.

Anschließend wird die Kamera 22 wieder in ihre ursprüngliche Stellung durch Bewegung des x-Schlittens 18 zurückgefahren, also in einer Position über dem jetzt vorliegenden Matrix-Code 26. Die Kamera nimmt jetzt ein Prüfbildsignal auf. Durch Korrelation mit dem bereits aufgenommenen und gespeicherten Referenzbildsignal kann beispielsweise die für die Qualitätsprüfung der Markierungspunkte störende Oberflächen-Textur des metallischen Werkstücks 11 ausgeblendet werden. Dies bedeutet de facto eine Ausblendung von eventuellen Störsignalen durch die Oberflächen-Textur, welche die zu bewertende Bildpunkt-Information für die Markierungspunkte verfälschen würde. Weitere störende Einflüsse für die Qualitätsprüfung können durch die Beleuchtung, die Optik, die Kamera oder die Signalfilterung entstehen. Auch diese Einflüsse lassen sich durch eine derartige Korrelation beseitigen.

Nun erfolgt die eigentliche Qualitätsprüfung der Markierungspunkte an den durch die gespeicherten Koordinaten vorgegebenen Stellen. Diese Koordinaten sind im Prinzip dieselben, die den Markiervorgang des Markierwerkzeugs steuern. Die Qualitätsprüfung kann auf verschiedene Weise und mit verschieden großem Aufwand durchgeführt werden. Qualitätskriterien sind beispielsweise die Fläche, die Länge, die Breite, die Ovalität, die Tiefe, der Flächenmittelpunkt und der Flächenschwerpunkt der Markierungspunkte. An den Positionsdaten werden die entsprechenden Bilddaten der Markierungspunkte erfasst und mit gespeicherten Vorgabewerten verglichen. Entsprechend festgestellter Abweichungen wird eine Qualitätsbeurteilung durchgeführt. Diese kann detailliert wiedergegeben werden oder im einfachsten Falle führen Überschreitungen von maximal zulässigen Abweichungen zu optischen und/oder akustischen Warnsignalen.

Zur Kompensation eines eventuell vorhandenen Lage-Offsets, d.h., einer Verschiebung aller x- und aller y-Werte gleichmäßig um einen bestimmten Betrag, wird der Mittelwert aller Lage-Abweichungen als Offset-Wert bestimmt und eine entsprechende Korrektur durchgeführt. Ein derartiger Offset stellt nämlich keine Qualitätsabweichung der zu prüfenden Markierungspunkte dar, sondern lediglich eine wie auch immer verursachte Ungenauigkeit der benutzten Lagerelation von Kamera 22 und Markierwerkzeug 17.

In Abwandlung des dargestellten Ausführungsbeispiels kann zur wechselseitigen Positionierung des Markierwerkzeugs 17 und der Kamera 22 anstelle der beschriebenen Linearbewegung auch eine Schwenkbewegung treten. Beispielsweise könnte eine Schwenkachse mittig zwischen dem Markierwerkzeug 17 und der Kamera 22 angeordnet sein, sodass durch einen 180°-Schwenkvorgang der Positionswechsel jeweils vollzogen werden kann. In einer einfacheren Ausführungsform kann die Kamera 22 auch bewegungsmäßig vom Markierwerkzeug 17 entkoppelt sein und beispielsweise fest markiert sein oder einen unabhängigen Bewegungsantrieb besitzen. Da hierdurch die Aufnahmeposition der Kamera von der des Markierwerkzeugs abweicht, muss dies bei der Umsetzung der Positionsdaten für die Markierungspunkte berücksichtigt werden. Auch die bei der Synchronbewegung mögliche toleranzfreie Positionierung und maßstäbliche Abbildung muss hier entsprechend elektronisch kompensiert werden.

Beim beschriebenen Ausführungsbeispiel ist die Bildverarbeitung zur Qualitätskontrolle mit der Produktionsmaschine, also mit dem Markierwerkzeug kombiniert. Der Zweck ist vor allem der, dass die Qualität der erzeugten Matrix-Codes so garantiert werden kann, dass sie im späteren Einsatz von Lesegeräten einwandfrei gelesen werden können. Prinzipiell ist das erfindungsgemäße Verfahren auch unabhängig von einem Markierwerkzeug durchführbar.

In einer einfacheren Ausführungsform kann die Aufnahme eines Referenzbildsignals und der Vergleich mit dem Prüfbildsignal auch entfallen, insbesondere dann, wenn Werkstücke mit einem Matrix-Code 26 zu versehen sind, die keine oder eine nur sehr schwache Oberflächen-Textur besitzen.

## Patentansprüche

1. Verfahren zur Qualitätskontrolle von zweidimensionalen Matrix-Codes in Form von Markierungspunkten, die anhand vorgegebener digitaler Positionsdaten mittels eines Markierwerkzeugs (17) auf ein metallisches Werkstück geprägt worden sind, mittels eines Bildverarbeitungsgeräts, wobei nach dem Prägevorgang das Bildverarbeitungsgerät (22) in dieselbe Position relativ zum Werkstück gebracht wird, in der sich zuvor das Markierwerkzeug befand, und mittels des Bildverarbeitungsgeräts nur an den durch die Positionsdaten vorgegebenen Stellen die entsprechenden Bilddaten daraufhin geprüft werden, ob sich dort jeweils ein korrekter Markierungspunkt mit den erwünschten Qualitätseigenschaften befindet.

2. Verfahren nach Anspruch 1, **dadurch gekennzeichnet, dass** zur Prüfung der erwünschten Qualitätseigenschaften der jeweiligen Markierungspunkte einer oder mehrere der folgenden Parameter erfasst, mit Vorgabedaten verglichen und/oder klassifiziert und/oder als Trend verfolgt werden: Fläche, Tiefe, Länge, Breite, Position von Flächenmittel- oder Flächenschwerpunkt, Ovalität oder aus diesen Parametern abgeleitete statistische Kenngrößen, insbesondere Mittelwert, Standardabweichung, Verteilungsform oder Klassenhäufigkeit.

3. Verfahren nach Anspruch 1 oder 2, **dadurch gekennzeichnet, dass** zur Kompensation eines eventuellen Lage-Offsets der Mittelwert der Lageabweichungen aller Markierungspunkte jeweils als Offsetwert subtrahiert wird.

4. Verfahren nach einem der vorhergehenden Ansprüche, **dadurch gekennzeichnet, dass** vor der Anbringung eines Matrix-Codes ein Referenzbild des entsprechenden Oberflächenbereichs des Werkstücks aufgenommen und gespeichert und/oder ausgewertet wird.

5. Verfahren nach Anspruch 4, **dadurch gekennzeichnet, dass** bei als zu schlecht erkanntem Oberflächenbereich eine Verschiebung zu einem anderen Oberflächenbereich erfolgt.

6. Verfahren nach Anspruch 4 oder 5, **dadurch gekennzeichnet, dass** eine Korrelation zwischen dem Referenzbild und den entsprechenden Bilddaten nach der Anbringung des Matrix-Codes zur Eliminierung von störenden Oberflächentexturdaten durchgeführt wird.

7. Verfahren nach einem der vorhergehenden Ansprüche, **dadurch gekennzeichnet, dass** die Bilddaten mit unterschiedlichen Schärfeeinstellungen erfasst, insbesondere in unterschiedlichen Abständen aufgenommen, und korreliert werden.

8. Verfahren nach einem der vorhergehenden Ansprüche, **dadurch gekennzeichnet, dass** die Bilddaten mit einem Referenzmuster korreliert werden, das durch Einblendung eines einzelnen, im Zuge der System-Kalibrierung vom Bildverarbeitungsgerät aufgenommenen Abbilds eines einzelnen Markierungspunkts an allen vorgegebenen Soll-Positionen von Markierungspunkten des aktuell zu vermessenden Matrix-Codes gewonnen wird.

9. Verfahren nach Anspruch 8, **dadurch gekennzeichnet, dass** zur Einblendung ein Abbild eines realen Markierungspunkts verwendet wird, dem bereits bestimmte Qualitätsklassen für ein oder mehrere Merkmale zugeordnet wurden, oder das durch statistische Mittelung einer Vielzahl von Markierungspunkten mit den jeweiligen Qualitätsmerkmalen gewonnen wurde.

10. Verfahren nach einem der vorhergehenden Ansprüche, **dadurch gekennzeichnet, dass** das Markierwerkzeugs (17) und das Bildverarbeitungsgerät (22) mechanisch miteinander gekoppelt bewegt werden.

## Claims

1. Method for the quality control of two-dimensional matrix codes in the form of marking points which have been embossed on a metallic workpiece by means of a marking tool (17) using predefined digital position data, by means of an image processing device, where after the embossing process, the image processing device (22) is brought into the same position in relation to the workpiece in which the marking tool was located previously, and where by means of the image processing device, the respective image data are checked, only in the places predefined by the position data, as to whether in each place there is located a correct marking point having the desired quality characteristics.

2. Method according to Claim 1, **characterized in that** for checking the desired quality characteristics of the respective marking points, one or more of the following parameters are recorded, compared with default data and/or classified and/or traced as a trend: area, depth, length, width, position of area center point or centroid, ovality, or statistical parameters derived from these parameters, in particular mean value, standard deviation, shape of distribution or class frequency.

3. Method according to Claim 1 or 2, **characterized in that** for the compensation of a possible position offset, the mean value of the position deviations of all marking points is respectively subtracted as an offset value.

4. Method according to one of the preceding claims, **characterized in that** before providing of a matrix code, a reference image of the corresponding surface area of the workpiece is taken and stored and/or evaluated.

5. Method according to Claim 4, **characterized in that** in case of a surface area recognized as being too bad, a shift to a different surface area takes place.

6. Method according to Claim 4 or 5, **characterized in that** after providing of the matrix code, a correlation between the reference image and the corresponding image data is performed for elimination of interfering surface texture data.

7. Method according to one of the preceding claims, **characterized in that** the image data are recorded with different focus settings, especially at different distances, and correlated.

8. Method according to one of the preceding claims, **characterized in that** the image data are correlated with a reference pattern produced by superimposing a single image of a single marking point, taken during system calibration by the image processing device, on all predefined desired positions of marking points of the matrix code to be currently measured.

9. Method according to Claim 8, **characterized in that** for superimposing, an image of a real marking point is used to which certain quality classes for one or more features have already been assigned or which has been obtained by statistical averaging of a multiplicity of marking points having the respective quality characteristics.

10. Method according to one of the preceding claims, **characterized in that** the marking tool (17) and the image processing device (22) are moved in mutual mechanical coupling.

## Revendications

1. Procédé de contrôle de qualité de codes de matrice bidimensionnels se présentant sous la forme de points de marquage, ayant été façonnés sur une pièce d'oeuvre métallique au moyen d'un outil de marquage (17), à l'aide de données de position numériques prédéterminées, au moyen d'un appareil de traitement d'image, où, après le processus de façonnage, l'appareil de traitement d'image (22) est placé, par rapport à la pièce d'oeuvre, dans la même position que celle où se trouvait précédemment l'outil de marquage et, au moyen de l'appareil de traitement d'image, uniquement aux emplacements prédéterminés par les données de position, étant effectué un contrôle des données image correspondantes, pour savoir si à cet endroit chaque fois se trouve un point de marquage correct, avec les propriétés de qualité souhaitées.

2. Procédé selon la revendication 1, **caractérisé en ce que**, pour contrôler les propriétés de qualité souhaitées des points de marquage spécifiques, pour un ou plusieurs des paramètres suivants, on procède à la détection, à la comparaison à des données d'affectation et/ou à la classification et/ou au suivi en tant que tendance : aire, profondeur, longueur, largeur, position du centre de surface ou du centre de gravité de surface, ovalité ou grandeurs caractéristiques dérivées de ces paramètres, en particulier valeur moyenne, écart-type, forme de distribution ou fréquence de classes.

3. Procédé selon la revendication 1 ou 2, **caractérisé en ce que**, pour compenser un éventuel décalage de position, on soustrait la valeur moyenne des écarts de position de tous les points de marquage, chaque fois sous forme de valeur de décalage.

4. Procédé selon l'une des revendications précédentes, **caractérisé en ce que**, avant l'application d'un code de matrice, une image de référence de la zone de surface correspondante de la pièce d'oeuvre est enregistrée et stockée et/ou évaluée.

5. Procédé selon la revendication 4, **caractérisé en ce que**, dans le cas d'une zone de surface identifiée comme trop mauvaise, un décalage est effectué vers une autre zone de surface.

6. Procédé selon la revendication 4 ou 5, **caractérisé en ce qu'**une mise en corrélation, entre l'image de référence et les données image correspondantes, est effectuée après application du code de matrice, dans le but d'éliminer des données de texture de surface perturbatrices.

7. Procédé selon l'une des revendications précédentes, **caractérisé en ce que** les données image sont détectées avec des réglages de netteté différents, en particulier enregistrées à des distances d'éloignement différentes, et mises en corrélation.

8. Procédé selon l'une des revendications précédentes, **caractérisé en ce que** les données image sont mises en corrélation avec un modèle de référence ayant été obtenu par mélange d'une image individuelle, enregistrée par l'appareil de traitement d'image au cours de l'étalonnage du système, d'un point de marquage spécifique à toutes les positions théoriques prédéterminées de points de marquage du code de matrice actuellement à mesurer.

9. Procédé selon la revendication 8, **caractérisé en ce que**, pour effectuer le mélange, on utilise une image d'un point de marquage réel, à laquelle furent associées des classes de qualité déjà déterminées pour une ou plusieurs caractéristiques, ou bien ayant été obtenue par formation de la moyenne statistique à partir d'une pluralité de points de marquage avec les caractéristiques de qualité respectives.

10. Procédé selon l'une des revendications précédentes, **caractérisé en ce que** l'outil de marquage (17) et l'appareil de traitement d'image (22) sont déplacés en étant couplés mécaniquement ensemble.
